(19) Europäisches Patentamt
European Patent Office
Office européen des brevets

(11) **EP 3 329 686 B1**

(12) **FASCICULE DE BREVET EUROPEEN**

(45) Date de publication et mention
de la délivrance du brevet:
**10.06.2020 Bulletin 2020/24**

(21) Numéro de dépôt: **16750655.9**

(22) Date de dépôt: **25.07.2016**

(51) Int Cl.:
*H04N 21/4627* (2011.01)   *H04N 21/435* (2011.01)
*H04N 7/167* (2011.01)

(86) Numéro de dépôt international:
**PCT/EP2016/067693**

(87) Numéro de publication internationale:
**WO 2017/017068 (02.02.2017 Gazette 2017/05)**

(54) **DISPOSITIF ET PROCEDE POUR MODIFIER UN FLUX DE DONNEES MULTIMEDIA CHIFFREES**

VORRICHTUNG UND VERFAHREN ZUR MODIFIZIERUNG EINES VERSCHLÜSSELTEN
MULTIMEDIENDATENSTROMS

DEVICE AND METHOD FOR MODIFYING AN ENCRYPTED MULTIMEDIA DATA STREAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2015 FR 1557257**

(43) Date de publication de la demande:
**06.06.2018 Bulletin 2018/23**

(73) Titulaire: **Sagemcom Broadband SAS
92500 Rueil-Malmaison (FR)**

(72) Inventeur: **BARDOUX, Gilles
92500 Rueil Malmaison (FR)**

(74) Mandataire: **Cabinet Le Guen Maillet
3, impasse de la Vigie
CS 71840
35418 Saint-Malo Cedex (FR)**

(56) Documents cités:
**US-A1- 2010 138 857   US-B2- 7 298 846**

## Description

La présente invention concerne le domaine de la transmission de flux de données multimédia, plus particulièrement le domaine de la modification de tels flux de données multimédia lorsqu'ils sont protégés par un chiffrement.

Il est connu d'altérer ou de modifier un flux de données multimédia, correspondant par exemple à un signal audio, vidéo ou audio-visuel, pouvant être diffusé sur un dispositif tel par exemple une télévision. Classiquement, les fonctions d'incrustation d'un premier programme dans un deuxième programme, plus connues sous l'acronyme anglais « PIP » (*Picture in Picture*), nécessitent ainsi de modifier un signal audio-visuel pour y incruster un autre signal audio-visuel dans une zone spécifique de l'écran de télévision.

Le document US20110265123 divulgue ainsi un système permettant de modifier un programme télévisuel, diffusé sous forme d'un signal audio-visuel, en y intégrant un contenu provenant d'une autre source.

Dans le cas d'un signal audio et/ou vidéo numérique, le signal prend la forme d'un flux de paquets de données (ci-après « flux de données »), les données codant le signal audio et/ou vidéo. Il est ainsi aisé d'extraire les données transportées par un flux entrant de paquets de données pour ensuite les modifier avant de les insérer dans un flux sortant de paquets de données.

Pour un signal audio et/ou vidéo numérique protégé, c'est-à-dire dont les données sont protégées par un chiffrement, il n'est pas possible de modifier les données du flux de paquets comme enseigné dans le document US20110265123, les données étant chiffrées. Un exemple de signal audio-visuel numérique protégé est défini par exemple dans les normes HDMI (*High-Definition Multimedia Interface*) et HDCP (*High-bandwidth Digital Content Protection*)*permettant* de relier une source audio/vidéo - comme un lecteur de DVD (*Digital Versatile Disc*) ou *Blu-ray*, un ordinateur ou une console de jeu - à un dispositif compatible, tel un téléviseur ou un vidéoprojecteur.

Il peut être envisagé alors de réaliser un déchiffrement des données pour pouvoir les modifier, puis ensuite de chiffrer les données modifiées, mais il s'agit là d'étapes de déchiffrement et de chiffrement de données fortement consommatrices en puissance de calcul, ce qui nécessite soit de disposer d'un dispositif offrant une plus grande puissance de calcul, donc plus cher et complexe à produire, soit de consacrer plus de temps afin de réaliser les opérations de déchiffrement et de chiffrement, ce qui introduit une plus grande latence dans le traitement du signal audio-visuel, soit une combinaison de ces solutions.

La même problématique se pose pour modifier des données audio ou des données vidéo.

Il est souhaitable de pallier ces inconvénients de l'état de la technique en fournissant une solution qui permette la modification d'un flux de données protégées par un chiffrement en optimisant les opérations de traitement du flux.

La présente invention concerne un procédé pour modifier un flux de données multimédia chiffrées, le procédé étant exécuté par un dispositif recevant en entrée ledit flux et émettant en sortie un flux de données multimédia chiffrées correspondant aux données du flux entrant après modification, le dispositif étant connecté à une source de contrôle ; ce procédé comprend les étapes suivantes : recevoir un message en provenance de la source de contrôle, ledit message comprenant une information permettant d'identifier une séparation du flux entrant de données multimédia chiffrées en au moins un premier sous-flux de données chiffrées et un deuxième sous-flux de données chiffrées ; déchiffrer les données chiffrées du ou des premiers sous-flux identifiés ; effectuer une modification des données déchiffrées du ou des premiers sous-flux identifiés, la modification se faisant à partir d'informations reçues en provenance de la source de contrôle ; chiffrer les données modifiées du ou des premiers sous-flux ; et effectuer une combinaison du ou des premiers sous-flux de données, modifiées et chiffrées, avec le deuxième sous-flux, de manière à obtenir le flux de données multimédia chiffrées émis en sortie par le dispositif.

Avantageusement, ce procédé permet donc de minimiser les étapes de déchiffrement et chiffrement, ces étapes étant consommatrices en temps ou puissance de calcul. En effet, seule une sous-partie du signal entrant, correspondant à au moins un premier sous-flux de données chiffrées, est déchiffrée puis chiffrée après modification, et non la totalité du signal entrant. Ainsi, le procédé permet de réduire la puissance de calcul nécessaire d'un dispositif mettant en œuvre le procédé, et donc la consommation et/ou le coût de revient du dispositif, ou, à puissance de calcul égale, de réduire la latence de traitement du signal audio, vidéo ou audio-visuel, ou, plus généralement, de tout signal correspondant à un flux de données multimédia.

Dans un mode de réalisation complémentaire, le procédé pour modifier un flux de données multimédia chiffrées comprend une étape, antérieure à la combinaison du ou des premiers sous-flux de données modifiées avec le deuxième sous-flux de données, de placement dans une mémoire tampon des données du deuxième sous-flux afin que le ou les premiers sous-flux de données, modifiées et chiffrées, et le deuxième sous-flux soient synchronisés.

Avantageusement, afin de compenser le temps de traitement des premiers sous-flux de données, le deuxième sous-flux est placé en mémoire tampon. Ainsi, l'étape de recombinaison des sous-flux peut se faire sur des sous-flux facilement synchronisés.

Dans un mode de réalisation particulier du procédé pour modifier un flux de données multimédia chiffrées, les données multimédia du flux entrant sont chiffrées par une première fonction de chiffrement, le chiffrement des données modifiées du ou des premiers sous-flux de données est réalisé par une deuxième fonction de chiffrement et le procédé comprend une étape, antérieure à la combinaison du ou des premiers sous-flux de données modifiées et du deuxième sous-flux, de transchiffrement des données du deuxième sous-flux de la première fonction de chiffrement vers la deuxième fonction de chiffrement, les données du flux émis par le dispositif étant donc chiffrées par la deuxième fonction de chiffrement.

Avantageusement, le procédé est compatible avec une fonction de transchiffrement du flux de données entrant d'une première fonction de chiffrement vers une deuxième fonction de chiffrement, l'avantage de ne déchiffrer totalement que le ou les premiers sous-flux de données étant conservé.

Dans un mode de réalisation complémentaire du procédé pour modifier un flux de données multimédia chiffrées, les données chiffrées du flux entrant sont chiffrées grâce à une fonction homomorphe et le procédé comprend en outre les étapes suivantes avant de déchiffrer le ou les premiers sous-flux identifiés : recevoir en outre en provenance de la source de contrôle un flux de données correspondant à des informations de modification globale à effectuer sur les données du flux entrant, chiffrer ces données grâce à la fonction homomorphe et réaliser une combinaison linéaire entre le flux de données précédemment chiffrées correspondant à des informations de modification globale et le flux de données multimédia chiffrées entrant, cette combinaison linéaire de flux devenant le flux entrant pour la réalisation des étapes subséquentes du procédé.

Avantageusement, il est ainsi possible d'effectuer des modifications sur le flux de données entrant sans avoir à effectuer une étape de déchiffrement. Ainsi, si d'autres modifications, non réalisables dans cette même précédente opération de modification, sont à effectuer sur un sous-flux de données particulier, seul ce sous-flux de données nécessite d'être déchiffré avant modification et non pas l'ensemble du flux de données.

Dans un autre mode de réalisation complémentaire du procédé pour modifier un flux de données multimédia chiffrées, le chiffrement des données modifiées du ou des premiers sous-flux est réalisé grâce à une fonction homomorphe et le procédé comprend les étapes suivantes antérieures à la combinaison du ou des premiers sous-flux de données, modifiées et chiffrées, avec le deuxième sous-flux de données transchiffrées :

- recevoir en provenance de la source de contrôle un flux de données correspondant à des informations de modification globale à effectuer sur les données du flux entrant,
- chiffrer ces données grâce à la fonction homomorphe, et,
- réaliser une combinaison linéaire entre le flux de données précédemment chiffrées correspondant à des informations de modification globale et le ou les premiers sous-flux de données, modifiées et chiffrées, respectivement et alternativement, le deuxième sous-flux de données transchiffrées, cette combinaison linéaire de flux devenant le ou les premiers sous-flux de données, modifiées et chiffrées, respectivement et alternativement, le deuxième sous-flux de données transchiffrées, pour la réalisation de la combinaison ultérieure constituant le flux de données multimédia chiffrées émis en sortie par le dispositif 100.

Avantageusement, et de manière semblable au précédent mode de réalisation, ce mode de réalisation permet d'effectuer des modifications sur le flux de données sans avoir à effectuer une étape de déchiffrement. Ainsi, si d'autres modifications, non réalisables dans cette même précédente opération de modification, sont à effectuer sur un sous-flux de données particulier, seul ce sous-flux de données nécessite d'être déchiffré avant modification et non pas l'ensemble du flux de données.

La présente invention concerne aussi un dispositif comportant des moyens pour recevoir un flux entrant de données multimédia chiffrées et émettre un flux sortant de données multimédia chiffrées, les données du flux sortant correspondant aux données du flux entrant après modification, le dispositif comprenant des moyens pour recevoir un message en provenance d'une source de contrôle, ledit message comprenant une information permettant d'identifier une séparation du flux entrant de données multimédia chiffrées en au moins un premier sous-flux de données chiffrées et un deuxième sous-flux de données chiffrées, des moyens pour déchiffrer les données chiffrées du ou des premiers sous-flux identifiés, des moyens pour effectuer une modification des données déchiffrées du ou des premiers sous-flux identifiés, la modification se faisant à partir d'informations reçues en provenance de la source de contrôle, des moyens pour chiffrer les données modifiées du ou des premiers sous-flux, et des moyens pour effectuer une combinaison du ou des premiers sous-flux de données, modifiées et chiffrées, avec le deuxième sous-flux, de manière à obtenir le flux de données multimédia chiffrées émis en sortie par le dispositif.

La présente invention concerne aussi un programme d'ordinateur, qui peut être stocké sur un support et/ou téléchargé d'un réseau de communication, afin d'être lu et exécuté par un processeur. Ce programme d'ordinateur comprend des instructions pour implémenter le procédé mentionné ci-dessus selon l'une quelconque de ses variantes. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la FIG. 1 illustre schématiquement un système comprenant un dispositif exécutant un procédé pour modifier un flux de données multimédia chiffrées selon un des modes de réalisation,

- la FIG. 2 illustre schématiquement un exemple d'architecture matérielle d'un dispositif exécutant un procédé selon un des modes de réalisation de la présente invention,

- la FIG. 3 illustre schématiquement un organigramme décrivant un mode de réalisation du procédé pour modifier un flux de données multimédia chiffrées,

- la FIG. 4 illustre schématiquement un exemple de découpe modulaire d'au moins une partie d'un dispositif exécutant un procédé pour modifier un flux de données multimédia chiffrées selon un premier mode de réalisation,

- la FIG. 5 illustre schématiquement un exemple de découpe modulaire d'au moins une partie d'un dispositif exécutant un procédé pour modifier un flux de données multimédia chiffrées selon un deuxième mode de réalisation, et,

- la FIG. 6 illustre schématiquement un exemple de découpe modulaire d'au moins une partie d'un dispositif exécutant un procédé pour modifier un flux de données multimédia chiffrées selon un troisième mode de réalisation.

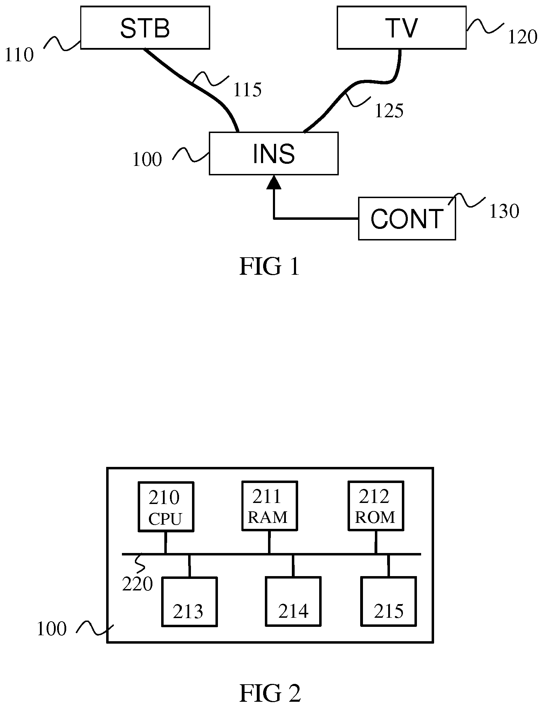

La FIG. 1 illustre schématiquement un système dans lequel la présente invention peut être mise en œuvre.

Le système de la FIG. 1 comporte un dispositif 100, exécutant le procédé pour modifier un flux de données chiffrés, le dispositif 100 étant connecté à un premier dispositif 110, par exemple un lecteur de DVD (*Digital Versatile Disc*) ou *Blu-ray*, un ordinateur, une console de jeu ou un décodeur TV (STB ; *Set Top Box*), et à un second dispositif 120, typiquement un téléviseur ou un vidéoprojecteur.

Plus généralement, le premier dispositif 110 peut être tout dispositif émettant un flux de données multimédia chiffrées.

De même, le deuxième dispositif 120 peut être tout dispositif pouvant recevoir un flux de données multimédia chiffrées, que ce soit par exemple pour les restituer (affichage sur un écran, etc.), pour les enregistrer ou pour les transmettre à un ou plusieurs autres dispositifs. Selon un mode de réalisation particulier, plusieurs dispositifs 120 peuvent être connectés au dispositif 100 et ainsi recevoir chacun un flux émis en sortie par le dispositif 100. Les flux émis en sortie pouvant être identiques pour tous les dispositifs 120 ou au contraire être spécifiques aux différents dispositifs 120 auxquels lesdits flux sont respectivement destinés.

Selon un mode de réalisation complémentaire, le dispositif 100 utilise une technologie de diffusion (« *broadcast* ») pour émettre le flux de données en sortie, plusieurs dispositifs 120 pouvant alors recevoir simultanément le flux émis.

Classiquement, les deux dispositifs 110 et 120 seraient directement connectés l'un à l'autre, le dispositif 100 se place donc en coupure dans la liaison ou connexion entre les deux dispositifs 110 et 120.

La connexion entre les différents dispositifs peut être réalisée via une connexion selon la norme HDMI (*High-Definition Multimedia Interface*), laquelle définit une norme ou standard pour faire transiter des flux multimédia (correspondant par exemple à des signaux audio, vidéo ou audio-visuels), lesquels peuvent être chiffrés par une technologie ou fonction de verrouillage anti-copie dite HDCP (*High-bandwidth Digital Content Protection*).

Dans la FIG. 1, les connexions 115 et 125 entre les différents dispositifs se font avec des câbles dits « HDMI ».

Selon d'autres modes de réalisation de la présente invention, la connexion entre deux dispositifs peut être faite via d'autres technologies, par exemple des technologies dite sans-fil de type WiDi (« *Wireless Display* ») ; de même le type de connexion entre le dispositif 110 et le dispositif 100 peut être différent du type de connexion entre le dispositif 100 et le dispositif 120. Un exemple de ce dernier mode de réalisation est l'utilisation de versions différentes de la norme HDMI pour les connexions 115 et 125.

Le dispositif 100 est aussi connecté à une source de contrôle 130. Par connexion, il faut entendre que le dispositif 100 et la source de contrôle 130 peuvent échanger des messages. Le dispositif 100 peut ainsi recevoir, en provenance de la source de la source de contrôle, des messages comprenant des commandes ou instructions, des informations, etc.

Le dispositif 100 et la source de contrôle 130 peuvent ainsi être directement connectés l'un à l'autre via un câblage ou connexion sans fil directe. Ils peuvent aussi être connectés à un même réseau, par exemple de type IP (*Internet protocol*), que ce soit via des interfaces de type Ethernet, WiFi (*Wireless Fidelity*) ou autre.

Selon un autre mode de réalisation, la source de contrôle 130 est intégrée dans le dispositif 100.

Le dispositif 100 est adapté pour recevoir en entrée un flux de données multimédia chiffrées, en provenance du dispositif 110, et émettre en sortie un flux de données multimédia chiffrées, vers le dispositif 120, le flux de données multimédia chiffrées émis vers le dispositif 120 correspondant au flux de données reçues en provenance du dispositif 110 et modifiées à partir d'informations reçues en provenance de la source de contrôle 130.

Le procédé décrit dans le présent document permet donc au dispositif 100 de recevoir puis modifier le flux de données multimédia chiffrées en provenance du dispositif 110 pour émettre ensuite le résultat de la modification, toujours chiffré, vers le dispositif 120.

La modification du flux de données reçu par le dispositif 100 se fait selon des informations reçues de la source de contrôle 130. En particulier, comme décrit plus en détail ci-après, la source de contrôle 130 fournit au dispositif 100 des informations permettant :

- d'identifier une séparation dans le flux entrant de données multimédia chiffrées, la séparation permettant de scinder le flux entrant en au moins un premier sous-flux de données chiffrées et un deuxième sous-flux de données chiffrées, et,
- de modifier les données du ou des premiers sous-flux identifiés, la modification se faisant donc à partir des informations reçues en provenance de la source de contrôle 130.

Les informations provenant de la source de contrôle 130 permettant d'identifier une séparation du flux entrant en sous-flux permettent d'identifier au moins un premier sous-flux de données chiffrées, le deuxième sous-flux étant identifié par complémentarité. Dit autrement, les informations d'identification permettent de séparer un ou plusieurs premiers sous-flux, le reste du flux entrant constituant le deuxième sous-flux. Dans ce cas, les informations d'identification permettent d'identifier la ou les parties du flux entrant qui sont modifiées dans les étapes ultérieures du procédé, c'est-à-dire le ou les premiers sous-flux.

Par modification, on entend ici une modification du contenu du flux entrant de données multimédia chiffrées, c'est-à-dire une modification ou altération des données multimédia. Dit autrement, on entend par là une modification du ou des média codés et transportés dans le flux de données. Le flux de données multimédia peut correspondre à un signal audio et/ou vidéo, par exemple un signal audio-visuel. On entend alors par modification le fait de modifier une ou des composantes audio ou vidéo du signal. Plus simplement, on peut dire que le signal audio-visuel correspondant au flux entrant de données est différent du signal audio-visuel correspondant au flux sortant de données après modification.

Il est ainsi à noter qu'une opération de transchiffrement d'un contenu, opération qui consiste à partir d'un contenu chiffré par une première fonction de chiffrement pour obtenir le même contenu chiffré par une deuxième fonction de chiffrement, n'est donc pas une modification dans le sens du présent document, le contenu même n'étant pas modifié lors l'opération.

Selon un mode de réalisation alternatif, les informations d'identification permettent d'identifier un deuxième sous-flux, le reste du flux entrant constituant un premier sous-flux. Dans ce cas, les informations d'identification permettent d'identifier la partie du flux entrant qui n'est pas modifiée dans les étapes ultérieures du procédé, c'est-à-dire le deuxième sous-flux.

Le ou les premiers sous-flux correspondent par exemple à :

- un ou plusieurs canaux audio du signal audio-visuel entrant dans le dispositif 100, et/ou,
- une ou plusieurs zones de l'image de la composante vidéo du signal audio-visuel entrant dans le dispositif 100.

Plus généralement, le ou les premiers sous-flux correspondent par exemple à une ou des zones spatio-temporelles d'un signal audio-visuel correspondant à un contenu multimédia, c'est à un dire un contenu pouvant comprendre une ou des vidéos (composante(s) vidéo(s)), un ou des sons (composante(s) audio(s)), des textes, etc.

Pour une partie ou composante vidéo d'un signal audio-visuel, le terme « zone spatio-temporelle » désigne une partie d'une image à un instant donné.

Pour une partie ou composante audio d'un signal audio-visuel, pouvant comprendre plusieurs canaux audio, le terme « zone spatio-temporelle » désigne un échantillon de son à un instant donné pour un canal audio donné.

Les informations reçues de la source de contrôle 130 et permettant de modifier les données du ou des premiers sous-flux peuvent être de nature diverse.

Dans le cas de premiers sous-flux de type flux audio, les informations peuvent être un signal audio destiné à être ajouté aux premiers sous-flux audio, voire destiné à les remplacer. On peut citer par exemple un signal audio de type « sirène d'alarme » destiné à être ajouté à au moins un canal audio du flux entrant.

Dans le cas de premiers sous-flux de type flux vidéo, les informations peuvent correspondre à un signal vidéo provenant d'une caméra de surveillance ou d'une *webcam.*

Dans le cas de premiers sous-flux de type textes, par exemple correspondant à des données de sous-titre ou de programme, les informations peuvent correspondre à un texte de remplacement.

Selon le mode de réalisation illustré dans la FIG. 1, les connexions 115 et 125 étant conformes au standard HDMI, les flux de données sont conformes aux formats préconisés par ce standard HDMI. Le format de la composante vidéo du flux de données multimédia peut par exemple être conforme à la norme d'encodage HDTV (*High Definition Television Haute Définition*) 1080p et le format de la composante audio conforme à une norme d'encodage de type PCM (*Pulse Code Modulation*).

La FIG. 2 illustre schématiquement un exemple d'architecture matérielle du dispositif 100. Le dispositif 100 comporte alors, reliés par un bus de communication 220 : un processeur ou CPU (*Central Processing Unit*) 210 ; une mémoire vive RAM (*Random Access Memory*) 211 ; une mémoire morte ROM (*Read Only Memory*) 212 ; une unité de stockage ou un lecteur de support de stockage, tel qu'un lecteur de cartes SD (*Secure Digital*) ou un disque dur HDD (*Hard Disk Drive*) (non représenté) ; et un ensemble d'interfaces 213, 214 et 215 permettant de connecter respectivement le dispositif 110, le dispositif 120 et la source de contrôle 130. L'interface 213 (dite « interface d'entrée ») peut ainsi recevoir un flux de données multimédias chiffrées en provenance du dispositif 110, l'interface 214 (dite « interface de sortie") peut ainsi émettre vers le dispositif 120 un flux de données multimédia modifiées et chiffrées, et l'interface 215 (dite « interface de contrôle ») peut recevoir en provenance de la source de contrôle 130 des messages comprenant des informations de différents types.

Le processeur 210 est capable d'exécuter des instructions chargées dans la RAM 211 à partir de la ROM 212, d'une mémoire ou support de stockage, interne ou externe, (non représenté) ou d'un réseau de communication. Lorsque le dispositif 100 est mis sous tension, le processeur 210 est capable de lire dans la RAM 211 des instructions et de les exécuter. Ces instructions forment un programme d'ordinateur permettant la mise en œuvre ou l'exécution, par le processeur 210, de tout ou partie des modules, algorithmes et étapes décrits dans le présent document.

Ainsi, tout ou partie des modules, algorithmes et étapes décrits dans le présent document peut être implémenté sous forme logicielle par exécution d'un ensemble d'instructions par une machine programmable, tel qu'un DSP (*Digital Signal Processor*) ou un microcontrôleur. Tout ou partie des modules, algorithmes et étapes décrits ci-après peut aussi être implémenté sous forme matérielle par une machine ou un composant dédié, tel qu'un FPGA (*Field-Programmable Gate Array*) ou un ASIC (*Application-Specific Integrated Circuit*).

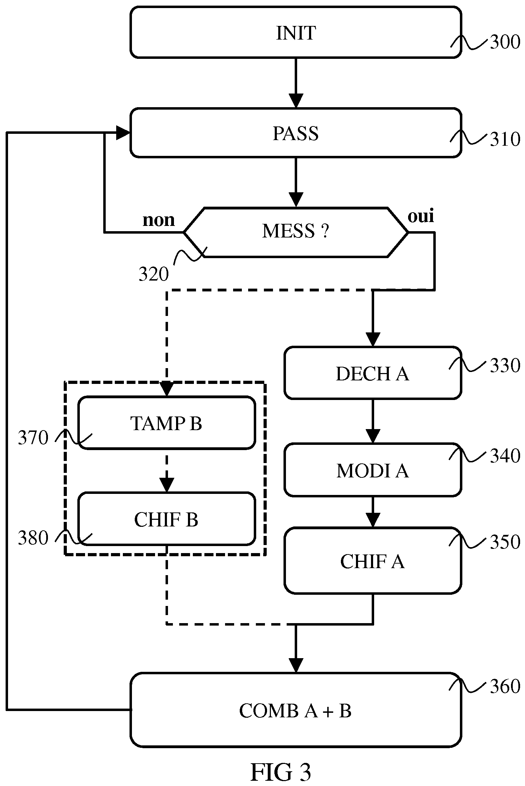

La FIG. 3 illustre schématiquement un organigramme décrivant un mode de réalisation du procédé de modification par le dispositif 100 d'un flux de données multimédia chiffrées en provenance du dispositif 110.

Une première étape ou phase 300 d'initialisation du dispositif 100 est exécutée lors par exemple de la mise sous tension du dispositif 100 ou suite à une demande de réinitialisation du dispositif 100. Cette première étape est typiquement réalisée lorsque le dispositif 100 est inséré entre les dispositifs 110 et 120. Par exemple, partant d'une situation où les dispositifs 110 et 120 sont directement connectés via un câble 115 (situation non représentée), l'extrémité du câble 115 connectée au dispositif 120 est déconnectée de ce dispositif 120 puis connectée au dispositif 100, sur l'interface dite d'entrée. Un nouveau câble 125 est connecté au dispositif 100, sur l'interface de sortie, et au dispositif 120, pour obtenir la configuration finale illustrée en FIG. 1. Le dispositif 100 peut être alimenté électriquement via un des câbles 115 ou 125, disposer d'une source d'alimentation interne (batterie), ou être alimenté par une source d'alimentation électrique externe.

La phase d'initialisation 300 peut comprendre une phase d'analyse du signal audio, vidéo ou audiovisuel entrant, c'est-à-dire du flux de données multimédia chiffrées en provenance du dispositif 110. Cette phase d'analyse peut comprendre une phase de récupération, auprès d'une source non représentée sur la FIG. 1, d'une clef de déchiffrement associée au flux de données entrant.

La phase d'initialisation 300 peut aussi comprendre une étape de détection, initialisation ou configuration d'une connexion avec la source de contrôle 130. Cette configuration peut se faire de façon automatique, ou de façon manuelle par un utilisateur du système. Selon un mode de réalisation, un menu de configuration peut par exemple être affiché par le dispositif 100 sur le dispositif 120.

Dans une phase suivante 310, et à défaut de réception de message en provenance de la source de contrôle 130, le dispositif 100 peut se comporter dans un mode dit « transfert » (*pass-through mode*), c'est-à-dire que le flux émis par le dispositif 100 en sortie correspond au flux entrant reçu en provenance du dispositif 110. Dans ce mode, aucune modification n'est apportée au contenu du flux de données multimédia chiffrées par le dispositif 100.

Dans une étape suivante 320, le dispositif 100 reçoit un message en provenance de la source de contrôle130, le message comprenant une information permettant d'identifier une séparation du flux entrant de données multimédia chiffrées en au moins un premier sous-flux de données chiffrées et un deuxième sous-flux de données chiffrées. Dit autrement, le dispositif 100 reçoit de la source de contrôle 130 un message l'informant qu'une sous-partie du signal audio-visuel entrant est à modifier. La sous-partie du signal correspondant au premier sous-flux de données ou aux premiers sous-flux de données est identifiée pour séparation. Concrètement, la séparation du flux entrant permet de distinguer entre une première partie du signal audio-visuel entrant qui est à modifier par le dispositif 100 et une autre partie qui n'est pas à modifier. La première partie du signal audiovisuel qui est à modifier correspond au ou aux premiers sous-flux, le ou les premiers sous-flux de données sont donc identifiés pour séparation.

A noter qu'en l'absence de message reçu en provenance de la source de contrôle 130, le dispositif 100 reste dans l'état 310, c'est-à-dire que le signal audiovisuel ou flux de données en provenance du dispositif 110 est transmis tel quel au dispositif 120.

Dans une étape 330, un message en provenance de la source de contrôle130 ayant été reçu, le message comprenant une information permettant d'identifier une séparation du flux entrant de données multimédia chiffrées en au moins un premier sous-flux de données chiffrées et un deuxième sous-flux de données chiffrées, le dispositif déchiffre les données chiffrées du ou des premiers sous-flux identifiés. Dit autrement, lors de cette étape 330, le dispositif déchiffre les données du flux entrant qui correspondent aux données du flux entrant à modifier, et seulement ces données-là. Ainsi, la totalité du flux entrant n'est pas déchiffrer, ce qui est une économie en termes de temps de calcul ou de puissance de calcul nécessaire. Il est à noter que, suivant la nature du chiffrement utilisé pour chiffrer les données du flux entrant, le dispositif 100 devra peut-être déchiffrer malgré tout une partie des données contenues dans le deuxième sous-flux de données afin de permettre le déchiffrement de données du ou des premiers sous-flux. Cela peut être

EP 3 329 686 B1

le cas pour un chiffrement de données fonctionnant par chiffrement de blocs de données, un bloc de données pouvant demander des informations issues d'un bloc précédent pour être déchiffré. En effet, les caractéristiques du chiffrement peuvent induire différentes contraintes. Ainsi, par exemple, si le chiffrement est de type « AES CBC » *(Advanced Encryption Standard, Cipher Block Chaining)*, il faut, lors de l'étape 330 de déchiffrement, connaître les données chiffrées correspondant au bloc précédent le bloc de données que l'on veut déchiffrer pour pouvoir déchiffrer ce bloc.

Suite à cette étape 330, les données du ou des premiers sous-flux ne sont plus chiffrées.

Dans une étape suivante 340, le dispositif 100 modifie les données du ou des premiers sous-flux identifiés, la modification se faisant à partir d'informations reçues en provenance de la source de contrôle 130. La ou les modifications peuvent consister en un remplacement des données du ou des premiers sous-flux par des données reçues en provenance de la source de contrôle 130. Les informations reçues en provenance de la source de contrôle 130 prennent alors la forme d'un ou plusieurs flux de données. Le dispositif 100 peut ainsi permettre une incrustation d'un signal audio-visuel provenant de la source de contrôle dans un signal audio-visuel en provenance du dispositif 110 (PIP ; *Picture In Picture)*, l'incrustation se faisant dans une zone spécifique définie par les informations comprises dans le message reçu lors de l'étape 320.

La ou les modifications peuvent correspondre à une superposition de signaux audio-visuels, c'est-à-dire en une combinaison de flux de données, combinaison entre le ou les premiers sous-flux de données et un flux de données provenant de la source de contrôle 130. L'homme du métier sait combiner plusieurs flux de données, c'est-à-dire effectuer une combinaison de plusieurs signaux audio-visuels, afin de constituer un signal superposant la pluralité des signaux audio-visuels, c'est-à-dire combinant la pluralité de flux de données. Par « combinaison », on entend ici toute fonction ou transformation prenant comme arguments les flux de données déchiffrées lors de l'étape 330 et les informations reçues en provenance de la source de contrôle 130, et ayant pour résultat un flux de données, dit flux de données combiné.

La modification peut consister en une modification des flux de données, la modification se faisant à partir d'informations reçues en provenance de la source de contrôle 130. Il peut s'agir d'une modification d'une image (renforcement du contraste, conversion couleur vers noir & blanc, etc.) et/ou du son (ajout d'un son - tel une sirène, application d'effet sonore - égaliseur par exemple).

Dans une étape 350 ultérieure, chaque premier sous-flux de données précédemment modifiées est chiffré. Comme discuté plus après dans ce document, le chiffrement peut se faire en utilisant la même fonction de chiffrement - et les mêmes paramètres de chiffrement - que le chiffrement protégeant le flux de données entrant reçu par le dispositif 100, ou peut se faire en utilisant une fonction de chiffrement distincte. Dans ce dernier cas, et uniquement dans ce dernier cas, une étape supplémentaire 380 est nécessaire pour adapter le chiffrement du deuxième sous-flux (étape de transchiffrement), étape 380 décrite ci-après.

Les étapes 320, 330, 340 et 350 permettent respectivement d'identifier, séparer et modifier un ou plusieurs premiers sous-flux, et d'obtenir *in fine* respectivement un ou des premiers sous-flux de données modifiées et chiffrées.

En parallèle à ces étapes 320, 330, 340 et 350, l'étape 370, et éventuellement l'étape 380, concernent le deuxième sous-flux de données. L'étape 370 correspond à un placement dans une mémoire tampon des données du deuxième sous-flux afin que le ou les premiers sous-flux de données, modifiées et chiffrées, et le deuxième sous-flux de données soient synchronisés, et ce dans l'optique de la recombinaison du ou des premiers sous-flux avec le deuxième sous-flux dans une étape 360 décrite ci-après. Dans l'hypothèse où le chiffrement du ou des premiers sous-flux effectué lors de l'étape 350 est un chiffrement à l'identique du chiffrement utilisé pour le flux entrant reçu par le dispositif 100 (c'est-à-dire, à l'identique du chiffrement du flux de données sortant du dispositif 110), alors le placement dans la mémoire tampon du deuxième sous-flux de données permet de compenser le temps de traitement du ou des premiers sous-flux lors des étapes 330, 340 et 350. Dit autrement, si la fonction de chiffrement utilisée lors de l'étape 350 et la fonction de chiffrement utilisée pour chiffrer le flux de données reçu par le dispositif 100 sont les mêmes, il n'y pas besoin d'étape 380 de transchiffrement du deuxième sous-flux.

Dans l'hypothèse où au contraire le chiffrement du ou des premiers sous-flux effectué lors de l'étape 350 est un chiffrement différent du chiffrement utilisé pour le flux entrant reçu par le dispositif 100, alors il est nécessaire de procéder à l'étape 380 de transchiffrement du deuxième sous-flux de données, et ce, afin que le ou les premiers sous-flux de données modifiées et chiffrées et le deuxième sous-flux de données aient un chiffrement identique.

Dit autrement, soit « f » la fonction de chiffrement permettant d'obtenir le flux de données chiffrées en sortie du dispositif 110, c'est-à-dire le flux de données entrant reçu par le dispositif 100 et soit « g » la fonction de chiffrement utilisée lors de l'étape 350, alors, si « f » est égale à « g », il n'y a pas d'étape 380 de transchiffrement du deuxième sous-flux.

Inversement, si la fonction « f » est différente de la fonction « g », alors un transchiffrement par une fonction « t » du deuxième sous-flux est réalisé lors de l'étape 380, avec :

$$t = g \circ f^{-1}$$

Ainsi, une opération de transchiffrement d'une fonction de chiffrement « f » vers une fonction de chiffrement « g », correspond à l'exécution d'une seule fonction « t ». Un transchiffrement réalisé en une seule étape par une fonction « t » est donc généralement moins consommateur en terme de temps de calcul ou de puissance de calcul qu'une première étape de déchiffrement (par une fonction « $f^{-1}$ ») suivie d'une deuxième étape de chiffrement (par la fonction « g »), ce qui est particulièrement avantageux.

Dans le cas où l'étape 380 de transchiffrement est nécessaire, le temps de placement dans une mémoire tampon des données du deuxième sous-flux réalisé lors de l'étape 370 est adapté afin d'intégrer le temps de traitement du transchiffrement du deuxième sous-flux, c'est-à-dire la durée de l'étape 380. Dit autrement, le temps de placement dans une mémoire tampon du deuxième sous-flux réalisé lors de l'étape 370 dans l'hypothèse où les fonctions « f » et « g » sont différentes est égal au temps de placement dans une mémoire tampon dans l'hypothèse où les fonctions « f » et « g » sont égales, réduit du temps de transchiffrement du deuxième sous-flux de données, c'est-à-dire du temps de réalisation de l'étape 380. Par temps de placement de données dans une mémoire tampon, il faut comprendre temps de maintien des données dans la mémoire tampon ; c'est-à-dire le temps qui s'écoule entre le moment où les données sont placées dans la mémoire tampon et le moment où les données sont extraites de la mémoire tampon pour réalisation d'une étape ultérieure.

Dit autrement, si les données multimédia du flux entrant sont chiffrées par une première fonction de chiffrement, correspondant à une fonction de chiffrement « f » et si le chiffrement des données modifiées du ou des premiers sous-flux est réalisé par une deuxième fonction de chiffrement, correspondant à une fonction de chiffrement « g », différente de la fonction « f », alors le procédé comprend une étape de transchiffrement 380, antérieure à la combinaison du ou des premiers sous-flux de données modifiées et du deuxième sous-flux (étape 360, voir ci-après). Le transchiffrement exécuté lors de l'étape 380 consiste en un transchiffrement des données du deuxième sous-flux de la première fonction de chiffrement (« f ») vers la deuxième fonction de chiffrement (« g »). Les données du flux émis par le dispositif 100 sont donc chiffrées par la deuxième fonction de chiffrement, soit le chiffrement correspondant à la fonction « g ».

Il est à noter que, selon les modes de réalisation, les étapes 370 et 380 peuvent être réalisées indifféremment soit dans l'ordre décrit dans ce document, soit dans un autre ordre, l'étape de transchiffrement 380 étant réalisée par exemple avant le placement en mémoire tampon de l'étape 370. Selon un mode de réalisation alternatif, la durée de traitement de l'étape 380 peut être adaptée pour correspondre à la durée de traitement totale des étapes 320, 330, 340 et 350. Dans ce cas, l'étape 370 de placement en mémoire tampon devient inutile.

Finalement, dans l'étape 360, le dispositif 100 combine le ou les premiers sous-flux de données modifiées et chiffrées, tels qu'obtenus à l'issue de l'étape 350, avec le deuxième sous-flux, retardé lors de l'étape 370 et éventuellement transchiffré lors de l'étape 380, de manière à obtenir un flux dit combiné. Ce flux combiné, issu de l'étape 360, constitue le flux de données multimédia chiffrées émis en sortie par le dispositif 100. Le flux de données issu de l'étape 360 correspond donc à un flux de données chiffrés, le chiffrement ayant été réalisé par la fonction « g ». Ce flux de données issu de l'étape 360 est le flux de données émis en sortie du dispositif 100. Ces données du flux sortant du dispositif 100 correspondent aux données du flux entrant dans le dispositif 100 après modification de certaines données du flux lors de l'étape 340. La ou les modifications ont été réalisées sans que la totalité du flux entrant de données n'ait été déchiffrée. Au final, le temps de calcul ou la puissance de calcul nécessaire pour mettre en œuvre le présent procédé est inférieur au temps de calcul ou à la puissance de calcul nécessaire pour mettre en œuvre un procédé implémentant une solution technique où la totalité du flux entrant doit être déchiffrée afin de pouvoir réaliser la ou les modifications.

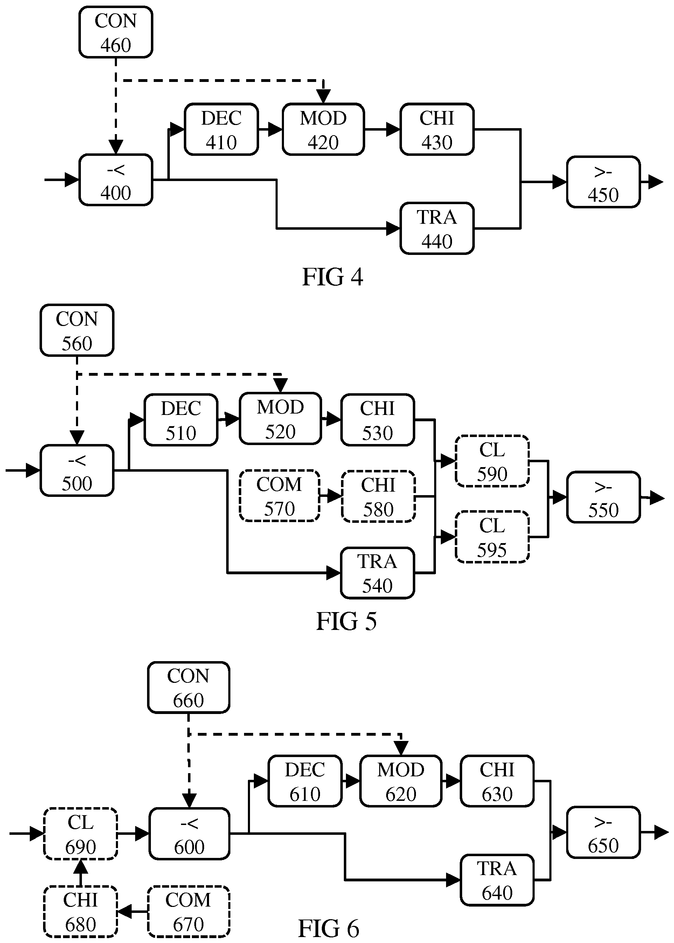

La FIG. 4 illustre schématiquement un exemple de découpe modulaire d'au moins une partie d'un dispositif 100 exécutant un procédé pour modifier un flux de données multimédia chiffrées selon un premier mode de réalisation du procédé illustré en FIG. 3.

Un module 400 reçoit en entrée le flux de données multimédia chiffrées émis par le dispositif 110, ainsi que des messages de la source de contrôle 130 (représentée ici par un module 460). Le module 400, en fonction de messages reçus de la source de contrôle 130, réalise l'étape 320 en procédant à la séparation du flux entrant en un ou des premiers sous-flux et un deuxième sous-flux (symbole « -< » dans les FIGS. 4, 5 et 6). Par séparation, on peut entendre une séparation physique de signaux électriques correspondant au flux entrant, une séparation physique des données du flux entrant, les données du ou des premiers sous-flux et du deuxième sous-flux étant dirigées vers des modules différents, ou une séparation virtuelle du ou des premiers sous-flux et du deuxième sous-flux, la séparation intervenant alors à un niveau logique.

Un module 410 réalise le déchiffrement (abréviation « DEC » dans les FIG. 4, 5 et 6) du ou des premiers sous-flux de données, comme décrit lors de l'étape 330.

Un module 420 réalise la ou les modifications (abréviation « MOD » dans les FIG. 4, 5 et 6) du ou des premiers sous-flux de données, telles que décrites lors de l'étape 340.

Un module 430 réalise le chiffrement (abréviation « CHI » dans les FIG. 4, 5 et 6) du ou des premiers sous-flux de données, tel que décrit lors de l'étape 350.

Un module 440 réalise le placement en mémoire tampon, et éventuellement le transchiffrement, du deuxième sous-flux, tels que décrits lors des étapes 370 et 380 (abréviation « TRA » dans les FIG. 4, 5 et 6).

Un module 450 réalise la combinaison du ou des premiers sous-flux de données, modifiées et chiffrées, et du deuxième sous-flux de données, éventuellement transchiffrées, telle que décrite lors de l'étape 360 (symbole « >- » dans les FIG. 4, 5 et 6).

L'interface d'entrée du dispositif 100, connectée au dispositif 110, correspond au module 400 et l'interface de sortie, connectée au dispositif 120, correspond au module 450.

Le module 460 correspond ici à la source de contrôle 130 (abréviation « CON » dans les FIG. 4, 5 et 6), cette source de contrôle 130 étant ici représentée comme un module interne au dispositif 100. Selon un autre mode de réalisation, la source de contrôle 130 est un module externe au dispositif 100.

Les FIG. 5 et 6 décrites ci-après correspondent à des modes de réalisations complémentaires de l'invention. Ces modes de réalisations sont caractérisés par le caractère homomorphe soit de la fonction de chiffrement utilisée pour chiffrer le flux entrant dans le dispositif 100, soit de la fonction de chiffrement utilisée lors de l'étape de chiffrement 350, soit de ces deux fonctions de chiffrement. Dans ces modes de réalisations complémentaires, de par le caractère homomorphe d'au moins une des deux fonctions de chiffrement, des changements peuvent être apportées au flux de données multimédia ou certains sous flux de données de données multimédia sous la forme dite de « compléments ». Comme on le verra ci-après, un changement ou complément est à distinguer d'une modification effectuée lors de l'étape 340 pour au moins ces raisons :

- l'application d'un complément nécessite qu'une fonction de chiffrement soit homomorphe, et,
- l'application d'un complément ne nécessite pas de déchiffrer le flux de données lors d'une étape 330.

Il est à noter que tout changement ou complément à appliquer au flux de données multimédia ou à certains sous-flux pourrait être effectué via une étape de modification 340. Cette étape de modification 340 nécessite par contre une étape 330 préalable de déchiffrement. A l'inverse, il n'est pas toujours possible d'effectuer une modification du flux de données multimédia, ou de certains sous-flux, via l'application d'un complément. C'est le cas si aucune fonction de chiffrement utilisée n'est homomorphe, mais aussi selon la nature des modifications à effectuer. Ainsi, certaines modifications requièrent pour être effectuées que les données multimédia à modifier soient préalablement déchiffrées et ne peuvent donc pas être effectuées via l'application d'un complément.

La FIG. 5 illustre schématiquement un exemple de découpe modulaire d'au moins une partie d'un dispositif exécutant un procédé pour modifier un flux de données multimédia chiffrées selon un deuxième mode de réalisation, ce mode de réalisation étant caractérisé par le caractère homomorphe de la fonction de chiffrement « g », fonction de chiffrement utilisée lors de l'étape 350.

Les modules 500, 510, 520, 530, 540, 550 et 560 correspondent respectivement aux modules précédemment décrits 400, 410, 420, 430, 440, 450 et 460 avec des fonctions similaires.

Les modules 570, 580, 590 et 595 sont propres à ce deuxième mode de réalisation caractérisé par le caractère homomorphe de la fonction de chiffrement « g ».

Si « S » représente un signal audio-visuel et « C » représente un complément audio-visuel à apporter au signal « S », l'application du complément C sur le signal S est notée « C x S », et, de par le caractère homomorphe de la fonction de chiffrement « g », on a :

$$g(C \text{ x } S) = g(C) \text{ x } g(S) \text{ ;}$$

Cette propriété d'homomorphisme de « g » est mise à profit dans les modules 570, 580, 590 et 595.

Le module 570 correspond à l'acquisition du complément audio-visuel « C » (abréviation « COM » dans les FIG. 5 et 6), ce complément « C » pouvant provenir par exemple de la source de contrôle 130 (ici le module de contrôle 560). Il peut s'agir par exemple d'un signal audio d'alarme destiné à être ajouté au signal audio-visuel émis par le dispositif 110.

Le module 580 prend en entrée ce complément « C » et applique la fonction de chiffrement « g » à ce complément. Dit autrement, le module 580 chiffre « C » en utilisant la fonction de chiffrement « g ».

De par le caractère homomorphe de la fonction « g », il est alors possible de combiner linéairement le résultat obtenu en sortie du module 580 avec le résultat obtenu en sortie du module 530 (signal audiovisuel correspondant au chiffrement par « g » des données modifiées du ou des premiers sous-flux) ou du module 540 (signal audiovisuel correspondant au transchiffrement et placement en mémoire tampon des données du deuxième sous-flux). Ces combinaisons sont respectivement exécutées par les modules 590 et 595 (abréviation « CL » dans les FIG. 5 et 6).

Le module 550 prend alors en entrée soit le résultat des modules 590 et 540, soit le résultat des modules 595 et 530, soit le résultat des modules 590 et 595, ces résultats étant combinés en sortie du module 550 pour former le flux de données modifiées et chiffrées du dispositif 100.

Dans le premier cas, le complément « C » est appliqué au(x) seul(s) premier(s) sous-flux.

Dans le deuxième cas, le complément « C » est appliqué au seul deuxième sous-flux.

Dans le troisième cas, le complément « C » est appliqué au(x) premier(s) et deuxième sous-flux.

Il est à noter que dans les deuxième et troisième cas, le deuxième sous-flux est *de facto* modifié par l'application d'un complément. Cependant, cette modification n'est pas réalisée par le module 520 et n'a donc pas nécessité le déchiffrement du deuxième sous-flux.

Dit autrement, selon ce deuxième mode de réalisation caractérisé par le caractère homomorphe de la fonction de chiffrement « g », le dispositif 100 est adapté pour effectuer les étapes suivantes, antérieures à la combinaison du ou des premiers sous-flux de données, modifiées et chiffrées, avec le deuxième sous-flux de données transchiffrées :

- recevoir en provenance de la source de contrôle 130 un flux de données correspondant à des informations de modification globale à effectuer sur les données du flux entrant (module 570),
- chiffrer ces données grâce à la fonction homomorphe « g » (module 580), et,
- réaliser une combinaison linéaire entre le flux de données précédemment chiffrées correspondant à des informations de modification globale et le ou les premiers sous-flux de données, modifiées et chiffrées (module 590), respectivement et alternativement, le deuxième sous-flux de données transchiffrées (module 595), cette combinaison linéaire de flux devenant le ou les premiers sous-flux de données, modifiées et chiffrées, respectivement et alternativement, le deuxième sous-flux de données transchiffrées, pour la réalisation de la combinaison ultérieure constituant le flux de données multimédia chiffrées émis en sortie par le dispositif (combinaison réalisée par le module 550).

Selon un mode de réalisation complémentaire de l'invention, il est possible d'appliquer un premier complément au premier sous-flux et un deuxième complément au deuxième sous-flux, les premier et deuxième compléments pouvant être différents. Dans ce cas, le module d'acquisition 570 peut recevoir les premier et deuxième compléments de la source de contrôle 130. Alternativement, deux sources de contrôle 130 différentes peuvent être connectées au module d'acquisition 570 et chacune fournir respectivement le premier et deuxième complément. Il est aussi possible selon un mode de réalisation de disposer d'au moins deux modules d'acquisition 570 et de deux modules de chiffrement 580, chaque premier et deuxième complément destiné respectivement au premier et deuxième sous-flux étant traité par un module d'acquisition 570 et un module de chiffrement 580 distincts.

La FIG. 6 illustre schématiquement un exemple de découpe modulaire d'au moins une partie d'un dispositif exécutant un procédé pour modifier un flux de données multimédia chiffrées selon un troisième mode de réalisation, ce mode de réalisation étant caractérisé par le caractère homomorphe de la fonction de chiffrement « f », fonction de chiffrement permettant d'obtenir le flux de données chiffrées en sortie du dispositif 110, c'est-à-dire fonction de chiffrement utilisée pour chiffrer le flux de données entrant reçu par le dispositif 100.

Les modules 600, 610, 620, 630, 640, 650 et 660 correspondent respectivement aux modules précédemment décrits 400, 410, 420, 430, 440, 450 et 460 avec des fonctions similaires.

Les modules 670, 680 et 690 sont propres à ce troisième mode de réalisation caractérisé par le caractère homomorphe de la fonction de chiffrement « f ».

Cette propriété d'homomorphisme de « f » est mise à profit dans les modules 670, 680 et 690.

Le module 670 correspond à l'acquisition du complément audio-visuel « C », ce complément « C » pouvant provenir de la source de contrôle 130 (ici le module de contrôle 660). Il s'agit par exemple d'un signal audio d'alarme destiné à être ajouté au signal audio-visuel émis par le dispositif 110.

Le module 680 prend en entrée ce complément « C » et applique la fonction de chiffrement « g » à ce complément. Dit autrement, le module 680 chiffre « C » en utilisant la fonction de chiffrement « f ».

De par le caractère homomorphe de la fonction « f », il est alors possible de combiner linéairement le résultat obtenu en sortie du module 680 directement avec le flux de données chiffrées entrant du dispositif 100.

Le module 600 prend alors en entrée le résultat de cette combinaison linéaire, ce qui permet d'appliquer le complément sur la totalité du signal audio-visuel entrant dans le dispositif 100.

Dit autrement, selon ce troisième mode de réalisation caractérisé par le caractère homomorphe de la fonction de chiffrement « f », le dispositif 100 est adapté pour effectuer les étapes suivantes, réalisées préalablement au déchiffrement du ou des premiers sous-flux identifiés :

- recevoir en provenance de la source de contrôle 130 un flux de données correspondant à des informations de modification globale à effectuer sur les données du flux entrant,
- chiffrer ces données grâce à la fonction homomorphe « f », et,
- réaliser une combinaison linéaire entre le flux de données précédemment chiffrées correspondant à des informations de modification globale et le flux de données multimédia chiffrées entrant, cette combinaison linéaire de flux devenant le flux entrant pour la réalisation des étapes suivantes du procédé, c'est-à-dire que la sortie du module 690 de combinaison linéaire est l'entrée du module 600 correspondant au module 400 en FIG. 4.

De façon générale, l'application d'un complément, en utilisant le caractère homomorphe d'une fonction de chiffrement, est moins consommateur en termes de temps de calcul ou de puissance de calcul que la réalisation d'une modification telle que décrite dans l'étape 340 (via un module 420, 520 ou 620) car ladite modification requiert une étape 330 préalable de déchiffrement (via un module 410, 510 ou 610) et une étape 350 ultérieure de chiffrement (via un module 430, 530 ou 630). En effet, les opérations de déchiffrement et chiffrement (étapes 330 et 350) sont des opérations lourdes en termes de puissance ou temps de calcul.

Selon un mode de réalisation complémentaire à l'invention, la source de contrôle 130 (module 460, 560 ou 660) peut intégrer un système de commande permettant de distinguer, lorsque des modifications doivent être apportées à un ou des sous-flux de données, entre les modifications qui doivent être effectuées via une étape 340 de modification et celles qui peuvent être effectuées sous forme de complément. Ainsi, avantageusement, le temps ou la puissance de calcul nécessaire est réduit par rapport à une solution ne mettant en œuvre qu'une unique étape de modification du ou des sous-flux de données multimédia telle que l'étape 340. La source de contrôle, recevant une demande de changement à apporter à un sous-flux de données multimédia, peut ainsi décider d'appliquer ce changement sous la forme d'un complément (via les modules 570, 580 et 590/595, ou 670, 680 et 690) plutôt que d'une modification (via un module 520 ou 620) afin d'économiser du temps ou de la puissance de calcul. La source de contrôle prend la décision d'effectuer un changement selon l'une ou l'autre des méthodes selon la nature des changements à apporter au flux de données multimédia. Si plusieurs modifications sont à apporter, la source de contrôle 130 peut ainsi distinguer entre un premier groupe de modifications à effectuer via une étape 340 (via un module 520 ou 620) et un second groupe de modifications à effectuer via l'application d'un complément (via les modules 570, 580 et 590/595, ou 670, 680 et 690). La source de contrôle 130 peut aussi scinder une modification à effectuer sur un sous-flux de données multimédia en une partie de la modification à effectuer via une étape 340 (via un module 520 ou 620) et une autre partie de la modification à effectuer via l'application d'un complément (via les modules 570, 580 et 590/595, ou 670, 680 et 690). La source de contrôle 130 (module 460, 560 ou 660) peut ainsi envoyer des messages comprenant les informations de modifications correspondantes aux modifications ou compléments à effectuer aux modules 520 ou 620 (pour les modifications) ou aux modules 570 ou 670 (pour les compléments).

La présente description du procédé, et du dispositif mettant en œuvre ledit procédé, pour modifier un flux de données multimédia chiffrées a mis en avant son application dans le cas où le flux de données multimédia correspond à un signal audio-visuel. Le même principe peut tout aussi bien être implémenté dans le cas où le flux de données multimédia correspond à un ou plusieurs signaux audio, à un ou plusieurs signaux vidéo, à des média de type texte, ou à toute combinaison des cas précédents.

**Revendications**

1. Procédé pour modifier un flux de données audio et/ou vidéo chiffrées, le procédé étant exécuté par un dispositif (100) recevant en entrée ledit flux et émettant en sortie un flux de données audio et/ou vidéo chiffrées correspondant aux données du flux entrant après modification, le dispositif étant connecté à une source de contrôle (130), **caractérisé en ce que** le procédé comprend les étapes suivantes :

   - recevoir (320) un message en provenance de la source de contrôle (130), ledit message comprenant une information permettant d'identifier une séparation du flux entrant de données audio et/ou vidéo chiffrées en au moins un premier sous-flux de données chiffrées et un deuxième sous-flux de données chiffrées,
   - déchiffrer (330) les données chiffrées du ou des premiers sous-flux identifiés,
   - effectuer une modification (340) des données déchiffrées du ou des premiers sous-flux identifiés, la modification se faisant à partir d'informations reçues en provenance de la source de contrôle (130),
   - chiffrer (350) les données modifiées du ou des premiers sous-flux, et,
   - effectuer une combinaison (360) du ou des premiers sous-flux de données, modifiées et chiffrées, avec le deuxième sous-flux, de manière à obtenir le flux de données audio et/ou vidéo chiffrées émis en sortie par le dispositif (100).

2. Procédé selon la revendication précédente, **caractérisé en ce que** le procédé comprend une étape (370), antérieure à la combinaison du ou des premiers sous-flux de données modifiées avec le deuxième sous-flux de données, de placement dans une mémoire tampon des données du deuxième sous-flux afin que le ou les premiers sous-flux de données, modifiées et chiffrées, et le deuxième sous-flux soient synchronisés.

3. Procédé selon l'une quelconque des revendications précédentes, **caractérisé en ce que** les données audio et/ou vidéo du flux entrant sont chiffrées par une première fonction de chiffrement, le chiffrement des données modifiées du ou des premiers sous-flux est réalisé par une deuxième fonction de chiffrement, et **en ce que** le procédé comprend une étape (380), antérieure à la combinaison du ou des premiers sous-flux de données modifiées et du deuxième sous-flux de données, de transchiffrement des données du deuxième sous-flux de la première fonction de chiffrement vers la deuxième fonction de chiffrement, les données du flux émis par le dispositif étant donc chiffrées par la deuxième fonction de chiffrement.

**4.** Procédé selon l'une quelconque des revendications précédentes, **caractérisé en ce que** les données chiffrées du flux entrant sont chiffrées grâce à une fonction homomorphe, le procédé comprenant en outre les étapes suivantes avant de déchiffrer le ou les premiers sous-flux identifiés :

- recevoir (670) en outre en provenance de la source de contrôle un flux de données correspondant à des informations de modification globale à effectuer sur les données du flux entrant,
- chiffrer (680) ces données grâce à la fonction homomorphe,
- réaliser une combinaison linéaire (690) entre le flux de données précédemment chiffrées correspondant à des informations de modification globale et le flux de données audio et/ou vidéo chiffrées entrant, cette combinaison linéaire de flux devenant le flux entrant pour la réalisation des étapes subséquentes du procédé.

**5.** Procédé selon la revendication 3, **caractérisé en ce que** le chiffrement des données modifiées du ou des premiers sous-flux est réalisé grâce à une fonction homomorphe, le procédé comprenant les étapes suivantes antérieures à la combinaison du ou des premiers sous-flux de données, modifiées et chiffrées, avec le deuxième sous-flux de données transchiffrées :

- recevoir (570) en provenance de la source de contrôle un flux de données correspondant à des informations de modification globale à effectuer sur les données du flux entrant,
- chiffrer (580) ces données grâce à la fonction homomorphe,
- réaliser une combinaison linéaire (590, 595) entre le flux de données précédemment chiffrées correspondant à des informations de modification globale et le ou les premiers sous-flux de données, modifiées et chiffrées, respectivement *et alternativement,* le deuxième sous-flux de données transchiffrées, cette combinaison linéaire de flux devenant le ou les premiers sous-flux de données, modifiées et chiffrées, respectivement *et alternativement,* le deuxième sous-flux de données transchiffrées, pour la réalisation de la combinaison ultérieure constituant le flux de données audio et/ou vidéo chiffrées émis en sortie par le dispositif 100.

**6.** Dispositif (100) comportant des moyens pour recevoir un flux entrant de données audio et/ou vidéo chiffrées et émettre un flux sortant de données audio et/ou vidéo chiffrées, les données du flux sortant correspondant aux données du flux entrant après modification, le dispositif (100) étant **caractérisé en ce qu'**il comprend :

- des moyens pour recevoir un message en provenance d'une source de contrôle (130), ledit message comprenant une information permettant d'identifier une séparation du flux entrant de données audio et/ou vidéo chiffrées en au moins un premier sous-flux de données chiffrées et un deuxième sous-flux de données chiffrées,
- des moyens pour déchiffrer les données chiffrées du ou des premiers sous-flux identifiés,
- des moyens pour effectuer une modification des données déchiffrées du ou des premiers sous-flux identifiés, la modification se faisant à partir d'informations reçues en provenance de la source de contrôle (130),
- des moyens pour chiffrer les données modifiées du ou des premiers sous-flux, et,
- des moyens pour combiner le ou les premiers sous-flux de données, modifiées et chiffrées, avec le deuxième sous-flux, de manière à obtenir le flux de données audio et/ou vidéo chiffrées émis en sortie par le dispositif (100).

**7.** Programme d'ordinateur, **caractérisé en ce qu'**il comprend des instructions pour mettre en œuvre, par un processeur (210), le procédé selon l'une quelconque des revendications 1 à 5, lorsque ledit programme d'ordinateur est exécuté par ledit processeur (210).

**8.** Moyens de stockage, **caractérisés en ce qu'**ils comprennent un programme d'ordinateur selon la revendication précédente.

**Patentansprüche**

**1.** Verfahren zur Modifizierung eines Stroms von verschlüsselten Audio- und/oder Videodaten, wobei das Verfahren von einer Vorrichtung (100) ausgeführt wird, die am Eingang den Strom empfängt und am Ausgang einen Strom von verschlüsselten Audio-und/oder Videodaten ausgibt, die den Daten des eintretenden Stroms nach Modifikation entsprechen, wobei die Vorrichtung mit einer Steuerquelle (130) verbunden ist, **dadurch gekennzeichnet, dass** das Verfahren die folgenden Schritte umfasst:

- Empfangen (320) einer Nachricht von der Steuerquelle (130), wobei die Nachricht eine Information umfasst, die es ermöglicht, eine Trennung des eintretenden Stroms von verschlüsselten Audio- und/oder Videodaten in wenigstens einen ersten Teilstrom von verschlüsselten Daten und einen zweiten Teilstrom von verschlüsselten Daten zu identifizieren,
- Entschlüsseln (330) der verschlüsselten Daten des oder der identifizierten ersten Teil ströme,

- Durchführen einer Modifikation (340) der entschlüsselten Daten des oder der identifizierten ersten Teilströme, wobei die Modifikation anhand von Informationen erfolgt, die von der Steuerquelle (130) kommend empfangen werden,
- Verschlüsseln (350) der modifizierten Daten des oder der ersten Teilströme, und
- Durchführen einer Kombination (360) des oder der ersten Teilströme von modifizierten und verschlüsselten Daten mit dem zweiten Teilstrom, um so den Strom von verschlüsselten Audio- und/oder Videodaten zu erhalten, der von der Vorrichtung (100) am Ausgang ausgegeben wird.

2. Verfahren nach dem vorhergehenden Anspruch, **dadurch gekennzeichnet, dass** das Verfahren einen der Kombination des oder der ersten Teilströme von modifizierten Daten mit dem zweiten Teilstrom von Daten vorausgehenden Schritt (370) des Ablegens der Daten des zweiten Teilstroms in einem Pufferspeicher umfasst, damit der oder die ersten Teilströme von modifizierten und verschlüsselten Daten und der zweite Teilstrom synchronisiert werden.

3. Verfahren nach einem der vorhergehenden Ansprüche, **dadurch gekennzeichnet, dass** die Audio- und/oder Videodaten des eintretenden Stroms durch eine erste Verschlüsselungsfunktion verschlüsselt werden, wobei die Verschlüsselung der modifizierten Daten des oder der ersten Teilströme durch eine zweite Verschlüsselungsfunktion durchgeführt wird, und dadurch, dass das Verfahren einen der Kombination des oder der ersten Teilströme von modifizierten Daten und des zweiten Teilstroms von Daten vorausgehenden Schritt (380) der Umverschlüsselung der Daten des zweiten Teilstroms von der ersten Verschlüsselungsfunktion zur zweiten Verschlüsselungsfunktion umfasst, wobei die Daten des von der Vorrichtung ausgegebenen Stroms somit durch die zweite Verschlüsselungsfunktion verschlüsselt sind.

4. Verfahren nach einem der vorhergehenden Ansprüche, **dadurch gekennzeichnet, dass** die verschlüsselten Daten des eintretenden Stroms mittels einer homomorphen Funktion verschlüsselt werden, wobei das Verfahren außerdem die folgenden Schritte vor dem Entschlüsseln des oder der identifizierten ersten Teilströme umfasst:

    - zusätzliches Empfangen (670), von der Steuerquelle, eines Datenstroms, der Informationen über eine globale Modifikation entspricht, die an den Daten des eintretenden Stroms durchzuführen ist,
    - Verschlüsseln (680) dieser Daten mittels der homomorphen Funktion,
    - Realisieren einer linearen Kombination (690) des Stroms von zuvor verschlüsselten Daten, der Informationen über eine globale Modifikation entspricht, und des eintretenden Stroms von verschlüsselten Audio- und/oder Videodaten, wobei diese lineare Kombination von Strömen zu dem eintretenden Strom für die Durchführung der nachfolgenden Schritte des Verfahrens wird.

5. Verfahren nach Anspruch 3, **dadurch gekennzeichnet, dass** die Verschlüsselung der modifizierten Daten des oder der ersten Teilströme mittels einer homomorphen Funktion durchgeführt wird, wobei das Verfahren die folgenden Schritte umfasst, die der Kombination des oder der ersten Teilströme von modifizierten und verschlüsselten Daten mit dem zweiten Teilstrom von umverschlüsselten Daten vorausgehen:

    - Empfangen (570), von der Steuerquelle, eines Datenstroms, der Informationen über eine globale Modifikation entspricht, die an den Daten des eintretenden Stroms durchzuführen ist,
    - Verschlüsseln (580) dieser Daten mittels der homomorphen Funktion,
    - Realisieren einer linearen Kombination (590, 595) des Stroms von zuvor verschlüsselten Daten, der Informationen über eine globale Modifikation entspricht, und des oder der Teilströme von modifizierten und verschlüsselten Daten, bzw., und alternativ dazu, des zweiten Teilstroms von umverschlüsselten Daten, wobei diese lineare Kombination von Strömen zu dem oder den ersten Teilströmen von modifizierten und verschlüsselten Daten, bzw., und alternativ dazu, zu dem zweiten Teilstrom von umverschlüsselten Daten für die Realisierung der anschließenden Kombination wird, die den Strom von verschlüsselten Audio- und/oder Videodaten bildet, der am Ausgang von der Vorrichtung (100) ausgegeben wird.

6. Vorrichtung (100), welche Mittel zum Empfangen eines eintretenden Stroms von verschlüsselten Audio- und/oder Videodaten und Ausgeben eines austretenden Stroms von verschlüsselten Audio- und/oder Videodaten aufweist, wobei die Daten des austretenden Stroms den Daten des eintretenden Stroms nach Modifikation entsprechen, wobei die Vorrichtung (100) **dadurch gekennzeichnet ist, dass** sie umfasst:

    - Mittel zum Empfangen einer Nachricht von einer Steuerquelle (130), wobei die Nachricht eine Information umfasst, die es ermöglicht, eine Trennung des eintretenden Stroms von verschlüsselten Audio- und/oder Videodaten in wenigstens einen ersten Teilstrom von verschlüsselten Daten und einen zweiten Teilstrom von verschlüsselten Daten zu identifizieren,

- Mittel zum Entschlüsseln der verschlüsselten Daten des oder der identifizierten ersten Teilströme,
- Mittel zum Durchführen einer Modifikation der entschlüsselten Daten des oder der identifizierten ersten Teilströme, wobei die Modifikation anhand von Informationen erfolgt, die von der Steuerquelle (130) kommend empfangen werden,
- Mittel zum Verschlüsseln der modifizierten Daten des oder der ersten Teilströme, und
- Mittel zum Kombinieren des oder der ersten Teilströme von modifizierten und verschlüsselten Daten mit dem zweiten Teilstrom, um so den Strom von verschlüsselten Audio- und/oder Videodaten zu erhalten, der von der Vorrichtung (100) am Ausgang ausgegeben wird.

**7.** Computerprogramm, **dadurch gekennzeichnet, dass** es Anweisungen zur Durchführung, durch einen Prozessor (210), des Verfahrens nach einem der Ansprüche 1 bis 5, wenn das Computerprogramm von dem Prozessor (210) ausgeführt wird, umfasst.

**8.** Speichermittel, **dadurch gekennzeichnet, dass** sie ein Computerprogramm nach dem vorhergehenden Anspruch umfassen.

**Claims**

**1.** Method for modifying a stream of encrypted audio and/or video data, the method being carried out by a device (100) that receives said stream as input and transmits, as output, a stream of encrypted audio and/or video data corresponding to the data of the incoming stream after modification, the device being connected to a control source (130), **characterized in that** the method comprises the following steps:

- receiving (320) a message from the control source (130), said message comprising information making it possible to identify a separation of the incoming stream of encrypted audio and/or video data into at least one first substream of encrypted data and one second substream of encrypted data;
- decrypting (330) the encrypted data of the identified one or more first substreams;
- making a modification (340) to the decrypted data of the identified one or more first substreams, the modification being made based on information received from the control source (130);
- encrypting (350) the modified data of the one or more first substreams; and
- combining (360) the one or more first substreams of modified and encrypted data with the second substream so as to obtain the stream of encrypted audio and/or video data transmitted as output by the device (100).

**2.** Method according to the preceding claim, **characterized in that** the method comprises a step (370), prior to combining the one or more first substreams of modified data with the second substream of data, of placing data of the second substream in a buffer so that the one or more first substreams of modified and encrypted data and the second substream are synchronized.

**3.** Method according to either of the preceding claims, **characterized in that** the audio and/or video data of the incoming stream are encrypted by a first encryption function, the modified data of the one or more first substreams being encrypted by a second encryption function, and **in that** the method comprises a step (380), prior to combining the one or more first substreams of modified data with the second substream of data, of transcrypting the data of the second substream from the first encryption function to the second encryption function, the data of the stream transmitted by the device therefore being encrypted by the second encryption function.

**4.** Method according to any one of the preceding claims, **characterized in that** the encrypted data of the incoming stream are encrypted by virtue of a homomorphic function, the method further comprising the following steps before decrypting the identified one or more first substreams:

- further receiving (670), from the control source, a stream of data corresponding to information on an overall modification to be made to the data of the incoming stream;
- encrypting (680) these data by virtue of the homomorphic function;
- linearly combining (690) the stream of previously encrypted data corresponding to information on an overall modification and the incoming stream of encrypted audio and/or video data, this linear stream combination becoming the incoming stream for performing the subsequent steps of the method.

**5.** Method according to Claim 3, **characterized in that** the modified data of the one or more first substreams are encrypted by virtue of a homomorphic function, the method comprising the following steps prior to combining the one or more first substreams of modified and encrypted data with the second substream of transcrypted data:

- receiving (570), from the control source, a stream of data corresponding to information on an overall modification to be made to the data of the incoming stream;

- encrypting (580) these data by virtue of the homomorphic function;

- linearly combining (590, 595) the stream of previously encrypted data corresponding to information on an overall modification and the one or more first substreams of modified and encrypted data, or, *alternatively*, the second substream of transcrypted data, this linear stream combination becoming the one or more first substreams of modified and encrypted data, or, *alternatively*, the second substream of transcrypted data, for performing the later combination forming the stream of encrypted audio and/or video data transmitted as output by the device (100).

6. Device (100) including means for receiving an incoming stream of encrypted audio and/or video data and transmitting an outgoing stream of encrypted audio and/or video data, the data of the outgoing stream corresponding to the data of the incoming stream after modification, the device (100) being **characterized in that** it comprises:

- means for receiving a message from a control source (130), said message comprising information making it possible to identify a separation of the incoming stream of encrypted audio and/or video data into at least one first substream of encrypted data and one second substream of encrypted data;

- means for decrypting the encrypted data of the identified one or more first substreams;

- means for making a modification to the decrypted data of the identified one or more first substreams, the modification being made based on information received from the control source (130);

- means for encrypting the modified data of the one or more first substreams; and

- means for combining the one or more first substreams of modified and encrypted data with the second substream so as to obtain the stream of encrypted audio and/or video data transmitted as output by the device (100).

7. Computer program, **characterized in that** it comprises instructions for implementing, by means of a processor (210), the method according to any one of Claims 1 to 5, when said computer program is run by said processor (210).

8. Storage means, **characterized in that** they comprise a computer program according to the preceding claim.

STB

110

115

TV

120

125

100

INS

CONT

130

FIG 1

| 210 CPU | 211 RAM | 212 ROM |

220

| 213 | 214 | 215 |

100

FIG 2

FIG 3

FIG 4

FIG 5

FIG 6

**EP 3 329 686 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110265123 A